# EUROPÄISCHE PATENTSCHRIFT

(11) **EP 0 777 524 B1**
(45) Veröffentlichungstag und Bekanntmachung des Hinweises auf die Patenterteilung: **14.10.1998**
(21) Anmeldenummer: 95929724.3
(22) Anmeldetag: 16.08.1995
(51) Int. Cl.: B01J 19/12, H05B 6/80

(54) **VERFAHREN UND VORRICHTUNG ZUR VERÄNDERUNG DER TEMPERATUR EINER DISKRETEN MATERIE**
METHOD AND DEVICE FOR CHANGING THE TEMPERATURE OF A DISCRETE MATERIAL
PROCEDE ET DISPOSITIF PERMETTANT DE MODIFIER LA TEMPERATURE D'UN MATERIAU DISCRET

(30) Priorität: 18.08.1994 DE 4430582
(43) Veröffentlichungstag der Anmeldung: 11.06.1997
(73) Patentinhaber: Broers, Dieter, 10435 Berlin (DE); Reichelt, Helmut, 01069 Dresden (DE)
(72) Erfinder: REICHELT, Helmut, D-01069 Dresden (DE)
(74) Vertreter: Neubauer, Hans-Jürgen, Dipl.-Phys.
(86) Internationale Anmeldenummer: DE9501166
(87) Internationale Veröffentlichungsnummer: WO9605910

(56) Entgegenhaltungen:
- DD-A- 208 029
- DD-A- 286 012
- FR-A- 807 349
- FR-A- 2 290 945
- GB-A- 304 587
- GB-A- 2 098 088
- US-A- 2 370 161

## Beschreibung

Die Erfindung betrifft ein Verfahren und eine Vorrichtung zur Veränderung der Temperatur einer diskreten Materie. Sie kann bei allen technischen Vorgängen, deren Prozeß mit einer Temperaturänderung verbunden ist, Anwendung finden. Dabei können die bei bekannten Verfahren zur Veränderung der Temperatur einer diskreten Materie auftretenden Verluste sowie der Energie- und Materialaufwand verringert werden. Unter diskreter Materie wird in der vorliegenden Erfindung eine Materie mit molekularen und/oder atomaren Eigenschwingungen verstanden, zum Beispiel Flüssigkeiten, Gase oder Lebewesen.

Es sind zahlreiche Verfahren und Vorrichtungen zur Veränderung der Temperatur einer diskreten Materie bekannt, wie z.B. ein Mikrowellengenerator, mit dessen Hilfe ein Wirkungsgrad der Energieumwandlung von mehr als 50 % erreicht werden kann (DE-AS 2 427 060).

Es sind auch dielektrische Kühleinrichtungen bekannt, die mit zyklischer Polarisation und Depolarisation arbeiten.

Bekannt ist auch eine Vorrichtung zur Verfügbarmachung von innerer Energie einer Stoffmenge (DE-OS 3 017 422). Hier werden in einem Raum von besonderer Form, durch die als kohärente impulsmodulierte elektromagnetische Strahlung eingegebene Erregerstrahlung, Veränderungen der Energieniveaus in den molekularen Bindungen erzeugt. Dabei müssen die als Laserstrahlen eingegebenen Erregerstrahlen in einem bestimmten Winkel zugeführt werden, der von der besonderen Form des Raums abhängig ist. Desweiteren muß der Raum eine Totalreflexion der Erregerstrahlen ermöglichen, und die im Raum entstehende Wärme muß über einen Wärmeübertrager abgeführt werden. Diese Vorrichtung hat den Nachteil, daß nur eine geringe Energiemenge umgesetzt werden kann und zusätlich Verluste durch den Wärmeübertrager auftreten.

In der DE-OS 25 12 694 wird ein Verfahern zur Veränderung der Raumzeit-Goemetrie einer diskreten Materie und in der DE-OS 25 12 695 eine Vorrichtung zur Veränderung der auf eine diskrete Masse wirkenden Raumzeit-Geometrie beschrieben. In beiden wird als diskrete Materie beispielsweise Wasser genannt.

Zudem ist ein Verfahren zur Kühlung bekannt (DD 286 012), bei dem auf eine Trägerfrequenz im Bereich von 10 KHz bis 10 MHz eine Frequenz von 10¹³ bis 10¹⁵ Hz aufmoduliert wird. Diese modulierte Trägerfrequenz wird von einer Sendeantenne abgestrahlt und auf Resonanz mit einem geometrisch definierten Raum abgestimmt. Über eine Empfangsantenne mit angeschlossenem Verbraucher wird dem Raum Wärme entzogen.

Aufgabe der Erfindung ist es, ein Verfahren und eine Vorrichtung zur Durchführung des Verfahrens zur Veränderung der Temperatur einer diskreten Materie zu schaffen, wobei ein hoher Wirkungsgrad realisierbar ist.

Diese Aufgabe wird für eine Erwärmung bezüglich des Verfahrens mit dem Anspruch 1 und bezüglich der Vorrichtung mit dem Anspruch 3 gelöst und für eine Kühlung bezüglich des Verfahrens mit dem Anspruch 6 und bezüglich der Vorrichtung mit dem Anspruch 8 gelöst.

Die Vorrichtung zur Veränderung der Temperatur einer diskereten Materie besteht aus einem Strahler, als großflächige Sendeantenne mit einer ersten und einer zweiten Zuleitung aus elektrisch gut leitendem Material, einer Antenne, die auf einer Seite von einer der Zuleitungen und auf der anderen Seite von einem gleichartigen Antennenbegrenzer begrenzt ist, einem mit den Zuleitungen verbundenen Generator, zur Erzeugung der Strahlungsenergie, einem zwischen den Antennenbegrenzer und eine der Zuleitungen geschalteten Verbraucher, einem zwischen den Generator und eine der Zuleitungen geschalteten Kondensator und einer im Strahlungsbereich des Strahlers angeordneten diskrete Materie.

Vorteilhaft ist der Strahler großflächig ausgebildet und wird von den Zuleitungen begrenzt, die zeckmäßig parallel zueinander angeordnet sind und einen Abstand voneinander aufweisen, der vorteilhaft einem ganzzahligen Vielfachen der vom Strahler abgestrahlten Wellenlänge entspricht.

Die Antenne ist ebenfalls vorteilhaft großflächig ausgebildet und wird zweckmäßig auf einer Seite von einer der Zuleitungen des Strahlers und auf der anderen Seite von einem Antennenbegrenzer begrenzt, die zeckmäßig parallel zueinander angeordnet sind und einen Abstand voneinander aufweisen, der vorteilhaft einem ganzzahligen Vielfachen der vom Strahler abgestrahlten Wellenlänge entspricht.

Bei einer Verwendung der Vorrichtung in einem mit einem flüssigen oder gasförmigen Medium gefüllten definierten Raum kann es zweckmäßig sein, daß die von Strahler emittierte Frequenz im Bereich der molelcularen Eigenfrequenz sowohl der diskreten Materie, als auch des in Raum vorhandenen Mediums liegt, um auch dieses in den Prozeß der Temperaturveränderung einzubeziehen.

Durch die Wechselwirkung des Strahlers mit der Materie im Bereich der Resonanzfrequenz wird ein Wirkungsgrad erreicht, der bei bekannten Heizsystemen nicht möglich ist.

Die Erfindung soll nachfolgend anhand eines Ausführungsbeispiels näher erläutert werden. Die zugehörige Zeichnung zeigt schematisch die erfindungsgemäße Vorrichtung.

Die diskrete Materie 1, zum Beispiel ein Lebewesen, befindet sich im Strahlungsbereich des Strahlers 2, als Sendeantenne der hier beispielsweise mit einer oberen und einer unteren Zuleitung 3 und 4 dargestellt ist. Der Abstand zwischen den parallel angeordneten Zuleitungen 3 und 4, die aus elektrisch gut leitendem Material bestehen, beträgt zweckmäßig ein ganzzahliges Wellenlängenvielfaches der Sendefrequenz.

Über diese Zuleitungen 3 und 4 wird dem Strahler 2 die vom Generator 9 erzeugte Energie zur Ausstrahlung der hochfrequenten elektromagnetischen Strahlung mit einer Frequenz in der Größenordnung der molekularen Eigenfrequenz der diskreten Materie 1 zugeführt.

Der großflächige Strahler 2 strahlt diese elektromagnetische Strahlung auf die diskrete Materie 1, und verursacht eine Resonanz der molekularen Eigenschwingungen in der diskreten Materie 1, die von dieser wieder abgestrahlt wird, wodurch eine zusätzliche Resonanz durch die Wechselwirkung zwischen der Schwingung der diskreten Materie 1 und der elektromagnetischen Strahlung des Flächenstrahlers 2 entsteht.

Das führt zu einer fast trägheitslosen Erwärmung der diskreten Materie 1, da fast keinerlei Verluste beim Energietransport durch Mittlermedien auftreten, sondern die diskrete Materie 1 erwärmt sich durch die verstärkte molekulare Eigenschwingung.

Befindet sich die Vorrichtung in einem geschlossen mediengefüllten Raum, kann durch geeignete Wahl des Strahlungsspektrums das Medium ebenfalls in die Resonanzwechselwirkung einbezogen werden, was auch zu einer Erwärmung des Mediums führt.

Wird eine Antenne 5 vorgesehen, die im Beispiel ebenfalls großflächig ausgebildet ist, und auf einer Seite von der Zuleitung 4 und auf der anderen Seite von einem gleichartigen Antennenbegrenzer 6 begrenzt wird, die parallel zueinander im Abstand eines ganzzahligen Wellenlängenvielfachen angeordnet sind, kann dem System Energie entzogen werden. Die von der in Resonanz schwingenden diskreten Materie 1 ausgesandte Strahlung wird von der Antenne 5 aufgenommen und über die Zuleitung 4 und und den Antennenbegrenzer 6 zu einem Verbraucher 7 gefürht, wobei der Generator 9 durch einen Kondensator 8 kapazitiv vom Verbraucher 7 getrennt ist.

Durch diese Energieabgabe kann sowohl in der diskreten Materie 1 als auch im umgebenden Medium eine Temperaturabsenkung erreicht werden, da die mit der Resonanzamplitude abgestrahlte elektromagnetische Strahlung einen höheren Energieinhalt aufweist, als die Erregerfrequenz, die eine relativ geringe Amplitude aufweisen kann.

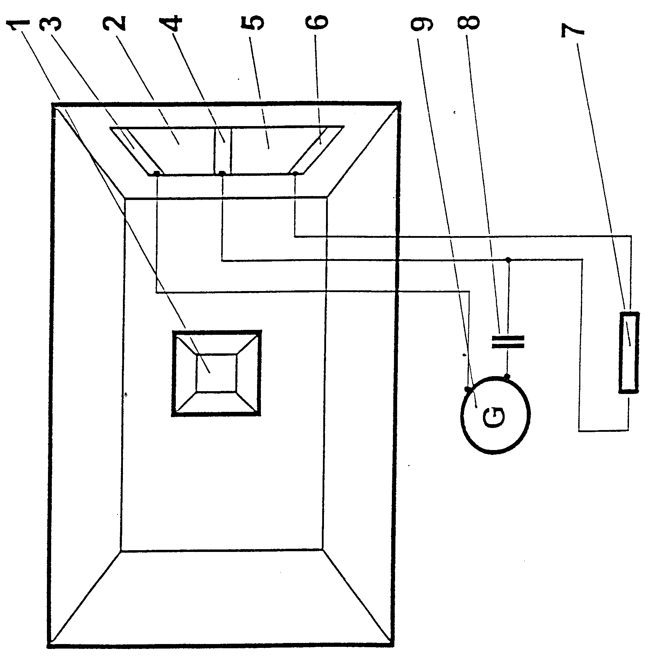

## Patentansprüche

1. Verfahren zur Veränderung der Temperatur einer diskreten Materie, dadurch gekennzeichnet,
daß zur Erhöhung der Temperatur der diskreten Materie (1)
- durch eine großflächige Sendeantenne (2)eine elektromagnetische Strahlung mit einer Frequenz abgestrahlt wird, die in der Größenordnung der molekularen Eigenschwingungen der zu erwärmenden diskreten Materie (1) liegt, ohne daß diese Frequenz eine aufmodulierte Trägerfrequenz ist.
- die zu erwärmende diskrete Materie (1) in den Strahlungsbereich der Sendeantenne (2) gebracht wird,
- in der diskreten Materie (1) eine zu einer Erwärmung derselben führende Resonanz der molekularen Eigenschwingungen erzeugt wird.

2. Verfahren nach Anspruch 1 dadurch gekennzeichnet, daß bei einer Anordnung der Vorrichtung in einem geschlossenen zusätzlich zu der diskreten Materie (1) mit einem Medium gefüllten Raum durch geeignete Wahl des Strahlungsspektrums das Medium ebenfalls zur Erwärmung in die Resonanzwechselwirkung einbezogen wird.

3. Vorrichtung zur Durchführung des Verfahrens zur Veränderung der Temperatur einer diskreten Materie nach Anspruch 1 oder Anspruch 2, gekennzeichnet
- durch eine großflächige Sendeantenne (2), der auf einer Seite von einer ersten Zuleitung (3) und auf der anderen Seite von einer zweiten Zuleitung (4) aus elektrisch gut leitendem Material begrenzt ist, und
- durch einen mit den Zuleitungen (3, 4) verbundenen Generator (9) zur Erzeugung der Strahlungsenergie, wobei die zu erwärmende, diskrete Materie (1) in den Strahlungsbereich der Sendeantenne (2) einbringbar ist.

4. Vorrichtung nach Anspruch 3, dadurch gekennzeichnet, daß die Sendeantenne (2) von den Zuleitungen (3, 4) begrenzt wird, die parallel zueinander angeordnet sind und einen Abstand voneinander aufweisen, der einem ganzzahligen Vielfachen der von der Sendeantenne (2) abgestrahlten Wellerlänge entspricht.

5. Vorrichtung nach Anspruch 3 oder Anspruch 4, dadurch gekennzeichnet, daß die von der Sendeantenne (2) emittierte Frequenz im Bereich der molekularen Eigenfrequenz der diskreten Materie (1) und/oder eines in einem definierten Raum angeordneten flüssigen oder gasförmigen Mediums liegt.

6. Verfahren zur Veränderung der Temperatur einer diskreten Materie, dadurch gekennzeichnet
daß zur Senkung der Temperatur der diskreten Materie (1)
- durch eine großflächige Sendeantenne (2) eine elektromagnetische Strahlung mit einer Frequenz abgestrahlt wird, die in der Größenordnung der molekularen Eigenschwingungen der zu kühlenden diskreten Materie (1) liegt, ohne daß diese Frequenz eine aufmodulierte Trägerfrequenz ist,
- die zu kühlende diskrete Materie (1) in den Strahlungsbereich des Strahlers (2) gebracht wird,
- in der diskreten Materie (1) eine Resonanz der molekularen Eigenschwingungen erzeugt wird,
- die von der in Resonanz schwingenden diskreten Materie (1) emittierte Strahlungsenergie von einer großflächigen Empfangsantenne (5) aufgenommen und abgeleitet wird.

7. Verfahren nach Anspruch 6, dadurch gekennzeichnet, daß bei einer Anordnung der Vorrichtung in einem geschlossenen zusätzlich zu der diskreten Materie (1) mit einem Medium gefüllten Raum, durch geeignete Wahl des Strahlungsspektrums das Medium ebenfalls zur Abkühlung in die Resonanzwechselwirkung einbezogen wird.

8. Vorrichtung zur Durchführung des Verfahrens zur Veränderung der Temperatur einer diskreten Materie nach Anspruch 6 oder Anspruch 7, gekennzeichnet durch eine großflächige Sendeantenne (2), mit einer ersten und einer zweiten Zuleitung (3, 4) aus elektrisch gut leitendem Material, einer großflächigen Antenne (5), die auf einer Seite von einer der Zuleitungen (4) und auf der anderen Seite von einem gleichartigen Antennenbegrenzer (6) begrenzt ist, durch einen mit den Zuleitungen (3, 4) verbundenen Generator (9), zur Erzeugung der Strahlungsenergie, einen zwischen den Antennenbegrenzer (6) und die Zuleitung (4) geschalteten Verbraucher (7), einen zwischen den Generator (9) und die Zuleitung (4) geschalteten Kondensator (8) und eine in den Strahlungsbereich der Sendeantenne (2) einbringbare diskrete Materie (1).

9. Vorrichtung nach Anspruch 8, dadurch gekennzeichnet, daß die Sendeantenne (2) von den Zuleitungen (3, 4) begrenzt wird, die parallel zueinander angeordnet sind und einen Abstand voneinander aufweisen, der einem ganzzahligen Vielfachen der von der Sendeantenne abgestrahlten Wellenlänge entspricht, und
daß die Antenne (5) auf einer Seite von der Zuleitung (4) der Sendeantenne (2) und auf der anderen Seite vom Antennenbegrenzer (6) begrenzt ist, die zweckmäßig parallel zueinander angeordnet sind und einen Abstand voneinander aufweisen, der einem ganzzahligen Vielfachen der von der Sendeantenne abgestrahlten Wellenlänge entspricht.

## Claims

1. Method for changing the temperature of a discrete substance,characterized in that,
to increase the temperature of the discrete substance (1),
- a large-area transmit antenna (2) is used to radiate electromagnetic radiation with a frequency which is of the order of the molecular natural vibrations of the discrete substance (1) to be heated, without this frequency being a modulated carrier frequency,
- the discrete substance (1) to be heated is brought into the radiation zone of the transmit antenna (2),
- a resonance of the molecular natural vibrations, which causes the discrete substance (1) to be heated, is produced in the latter.

2. Method according to Claim 1, characterized in that in the case when the device is arranged in a closed space filled with a medium in addition to the discrete substance (1), through suitable choice of the radiation spectrum the medium also becomes involved for heating in the resonance interaction.

3. Device for carrying out the method for changing the temperature of a discrete substance according to Claim 1 or Claim 2, characterized
- by a large-area transmit antenna (2) which is bounded on one side by a first feed line (3) and on the other side by a second feed line (4) made of material with high electrical conductivity, and
- by a generator (9) which is intended to produce the radiation energy and is connected to the feed lines (3, 4), it being possible for the discrete substance (1) to be heated to be brought into the radiation zone of the transmit antenna (2).

4. Device according to Claim 3, characterized in that the transmit antenna (2) is bounded by the feed lines (3, 4), which are arranged parallel to one another and have a mutual separation corresponding to an integer multiple of the wavelength radiated by the transmit antenna (2).

5. Device according to Claim 3 or Claim 4, characterized in that the frequency emitted by the transmit antenna (2) is in the region of the molecular natural frequency of the discrete substance (1) and/or of a liquid or gaseous medium arranged in a defined space.

6. Method for changing the temperature of a discrete substance, characterized in that,
to reduce the temperature of the discrete substance (1),
- a large-area transmit antenna (2) is used to radiate electromagnetic radiation with a frequency which is of the order of the molecular natural vibrations of the discrete substance (1) to be cooled, without this frequency being a modulated carrier frequency,
- the discrete substance (1) to be cooled is brought into the radiation zone of the transmit antenna (2),
- a resonance of the molecular natural vibrations is produced in the discrete substance (1),
- the radiation energy emitted by the resonating discrete substance (1) is picked up and dissipated by a large-area receive antenna (5).

7. Method according to Claim 6, characterized in that in the case when the device is arranged in a closed space filled with a medium in addition to the discrete substance (1), through suitable choice of the radiation spectrum the medium also becomes involved for cooling in the resonance interaction.

8. Device for carrying out the method for changing the temperature of a discrete substance according to Claim 6 or Claim 7, characterized by a large-area transmit antenna (2) having first and second feed lines (3, 4) made of material with high electrical conductivity, a large-area antenna (5) which is bounded on one side by one of the feed lines (4) and on the other side by a similar antenna limiter (6), by a generator (9) which is intended to produce the radiation energy and is connected to the feed lines (3, 4), a load (7) connected between the antenna limiter (6) and the feed line (4), a capacitor (8) connected between the generator (9) and the feed line (4) and a discrete substance (1) which can be brought into the radiation zone of the transmit antenna (2).

9. Device according to Claim 8, characterized in that the transmit antenna (2) is bounded by the feed lines (3, 4), which are arranged parallel to one another and have a mutual separation corresponding to an integer multiple of the wavelength radiated by the transmit antenna (2), and
in that the antenna (5) is bounded on one side by the feed line (4) of the transmit antenna (2) and on the other side by the antenna limiter (6), which are expediently arranged parallel to one another and have a mutual separation corresponding to an integer multiple of the wavelength radiated by the transmit antenna (2).

## Revendications

1. Procédé pour modifier la température d'un matériau discret, caractérisé en ce que
pour augmenter la température du matériau discret (1)
- on irradie, au moyen d'une antenne émettrice (2) à grande surface, un rayonnement électromagnétique à une fréquence qui est située dans l'ordre de grandeur des fréquences propres moléculaires du matériau discret (1) à chauffer, sans que cette fréquence soit une fréquence porteuse surmodulée,
- on place le matériau discret (1) à chauffer dans la zone de rayonnement de l'antenne émettrice (2),
- on génère dans le matériau discret (1) une résonance, menant à un chauffage de celui-ci, des vibrations propres moléculaires.

2. Procédé selon la revendication, caractérisé en ce que, en cas d'agencement du dispositif dans une enceinte fermée, remplie d'un milieu en plus du matériau discret (1), par un choix approprié du spectre de rayonnement, on place le milieu également en chauffage dans l'effet mutuel de résonance.

3. Dispositif de mise en oeuvre du procédé de modification de la température d'un matériau discret selon la revendication 1 ou la revendication 2, caractérisé
- par une antenne émettrice (2) à grande surface qui est délimitée sur un côté par une première ligne d'amenée (3) et de l'autre côté par une deuxième ligne d'amenée (4), en un matériau bon conducteur de l'électricité, et
- par un générateur (9) relié aux lignes d'amenée (3, 4), en vue de générer l'énergie de rayonnement, le matériau discret (1) à chauffer étant susceptible d'être introduit dans la zone de rayonnement de l'antenne émettrice (2).

4. Dispositif selon la revendication 3, caractérisé en ce que l'antenne émettrice (2) est délimitée par les lignes d'amenée (3, 4) qui sont disposées parallèlement l'une à l'autre et présentent l'une par rapport à l'autre un espacement qui correspond à un multiple entier de la longueur d'onde rayonnée par l'antenne émettrice (2).

5. Dispositif selon la revendication 3 ou la revendication 4, caractérisé en ce que la fréquence émise par l'antenne émettrice (2) est située dans la plage de la fréquence propre moléculaire du matériau discret (1) et/ou d'un milieu liquide ou gazeux disposé dans un espace défini.

6. Procédé de modification de la température d'un matériau discret, caractérisé en ce que
pour diminuer la température du matériau discret (1)
- par une antenne émettrice (2) à grande surface est émis un rayonnement électromagnétique ayant une fréquence qui est située dans l'ordre de grandeur des fréquences propres moléculaires du matériau discret (1) à refroidir, sans que cette fréquence porteuse surmodulée,
- on place le matériau discret (1) à chauffer dans la zone de rayonnement de l'antenne émettrice (2),
- on génère dans le matériau discret (1) une résonance des vibrations propres moléculaires,
- l'énergie de rayonnement, émise par le matériau discret (2) vibrant en résonance, est captée et évacuée par une antenne émettrice (5) à grande surface.

7. Procédé selon la revendication 6, caractérisé en ce que, en cas d'agencement du dispositif dans une enceinte fermée remplie d'un milieu en plus du matériau discret (1), par un choix approprié du spectre de rayonnement, on place le milieu également en refroidissement dans l'effet mutuel de résonance.

8. Procédé de mise en oeuvre du procédé de modification de la température d'un matériau discret selon la revendication 6 ou la revendication 7, caractérisé par une antenne émettrice (2) à grande surface, avec une première et deuxième ligne d'amenée (3, 4) en un matériau conducteur de l'électricité, une antenne (5) à grande surface, qui est délimitée sur un côté par l'une des lignes d'amenée (4) et de l'autre côté par un limiteur d'antenne (6) du même genre, par un générateur (9) relié aux lignes d'amenée (3, 4), en vue de générer l'énergie de rayonnement, un consommateur (7) mis en circuit entre le limiteur d'antenne (6) et la ligne d'amenée (4), un condensateur (8) branché entre le générateur (9) et la ligne d'amenée (4) et un matériau discret (1) susceptible d'être introduit dans la zone de rayonnement de l'antenne émettrice (2).

9. Dispositif selon la revendication 8, caractérisé en ce que l'antenne émettrice (2) est délimitée par les lignes d'amenée (3, 4), qui sont disposées parallèlement et présentent l'une par rapport à l'autre un espacement qui correspond à un multiple entier de la longueur d'onde rayonnée par l'antenne émettrice, et
en ce que l'antenne (5) est délimitée, sur un côté, par la ligne d'amenée (4) de l'antenne émettrice (2) et, de l'autre côté, par le limiteur d'antenne (6), éléments qui, de manière appropriée, sont disposés parallèlement l'un à l'autre et présentent l'un par rapport à l'autre un espacement qui correspond à un multiple entier de la longueur d'onde rayonnée par l'antenne émettrice.
